(19) Europäisches Patentamt
European Patent Office
Office européen des brevets

(11) EP 2 776 742 B1

(12) **EUROPÄISCHE PATENTSCHRIFT**

(45) Veröffentlichungstag und Bekanntmachung des Hinweises auf die Patenterteilung:
23.05.2018 Patentblatt 2018/21

(21) Anmeldenummer: 12786944.4

(22) Anmeldetag: 07.11.2012

(51) Int Cl.:
*F01P 5/12* (2006.01)          *F01P 3/00* (2006.01)
*F01P 7/16* (2006.01)          *F04B 35/00* (2006.01)
*F16D 48/02* (2006.01)          *F16H 57/04* (2010.01)

(86) Internationale Anmeldenummer:
PCT/EP2012/072058

(87) Internationale Veröffentlichungsnummer:
WO 2013/068419 (16.05.2013 Gazette 2013/20)

(54) **ANTRIEBSSTRANG-KÜHLANORDNUNG UND VERFAHREN ZU DEREN BETREIBEN**

DRIVE TRAIN COOLING ARRANGEMENT AND METHOD FOR OPERATING SAME

DISPOSITIF DE REFROIDISSEMENT POUR CHAÎNE CINÉMATIQUE, ET PROCÉDÉ POUR LE FAIRE FONCTIONNER

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 09.11.2011 DE 102011118574

(43) Veröffentlichungstag der Anmeldung:
17.09.2014 Patentblatt 2014/38

(73) Patentinhaber: GETRAG B.V. & Co. KG
74199 Untergruppenbach (DE)

(72) Erfinder:
• RUEHLE, Guenter
74369 Loechgau (DE)
• KIEHLNEKER, Alexander
74223 Flein (DE)

(74) Vertreter: Witte, Weller & Partner Patentanwälte mbB
Postfach 10 54 62
70047 Stuttgart (DE)

(56) Entgegenhaltungen:
WO-A1-03/106825          DE-A1- 19 925 986
DE-A1-102004 058 869          GB-A- 2 108 262
JP-A- S59 130 764          US-A- 4 554 891
US-A- 5 894 825          US-A1- 2004 045 749

**Beschreibung**

Die vorliegende Erfindung betrifft eine Antriebsstrang-Kühlanordnung für Kraftfahrzeuge, mit einem ersten Kühlkreis und einem zweiten Kühlkreis sowie mit einer Pumpenanordnung, mittels der Kühlmittel dem ersten und dem zweiten Kühlkreis zugeführt werden kann.

Ferner betrifft die vorliegende Erfindung ein Verfahren zum Betreiben einer solchen Kühlanordnung. In Antriebssträngen von Kraftfahrzeugen ist es bekannt, Baugruppen eines Getriebes wie Lagern und Verzahnungen Kühl- bzw. Schmieröl im Wege einer Einspritzschmierung zuzuführen. Hierbei ist im Bereich eines Getriebesumpfes in der Regel eine Pumpe vorgesehen, die beispielsweise über einen Antriebsmotor wie einen Verbrennungsmotor angetrieben werden kann.

Ferner ist es auf dem Gebiet der Antriebsstränge bekannt, nass laufende Lamellenkupplungen, wie sie beispielsweise in Doppelkupplungsgetrieben regelmäßig verwendet werden, zu kühlen. Hierbei wird eine separate Pumpe verwendet, die in der Regel ebenfalls mit einer Kurbelwelle gekoppelt ist und im Betrieb ständig einen Pumpendruck aufbaut.

Zum Kühlen solcher Reibkupplungen wird in der Regel ein ATF-Öl mit relativ niedriger Viskosität verwendet, wohingegen in vielen Getrieben zum Schmieren sogenanntes Hypoid-Öl mit höherer Viskosität verwendet wird.

Das Zuführen eines Volumenstromes von solchem Kühl- oder Schmierfluid erfolgt dabei in der Regel über elektromagnetisch angesteuerte Ventilanordnungen. Derartige Ventile beinhalten in der Regel Schieberventile, die hohe Anforderungen hinsichtlich der Sauberkeit bei Fertigung und Montage stellen.

Bei Antriebssträngen für Kraftfahrzeuge, die zusätzlich einen Elektromotor als Antriebsmotor aufweisen (Hybrid-Antriebsstränge), kann es auch erforderlich sein, den Elektromotor zu kühlen. Hierfür ist eine weitere Kühlanordnung vorgesehen, die ebenfalls i.A. mit ATF-Öl betrieben wird. Dabei ist in der Regel eine elektrisch angetriebene Kühlmittelpumpe für die Kühlmittelversorgung des elektrischen Antriebsmotors vorgesehen, um auch einen rein elektrischen Fahrbetrieb zu ermöglichen.

Aus dem Dokument US 2004/0045749 ist ein Antriebsstrang für ein Hybridfahrzeug mit einem Verbrennungsmotor und einem integrierten Startergenerator bekannt. Der Antriebsstrang weist eine Mehrzahl von Kühlkreisläufen auf, wobei die verschiedenen Kühlkreisläufe durch Einstellen entsprechender Ventile mit Kühlfluid versorgt werden. Aus diesem Dokument ist es weiter bekannt, eine bidirektionale Pumpe in wenigstens einem der Kühlkreisläufe vorzusehen, um die Fließrichtung des Kühlfluids umzukehren und so eine schnellere Erwärmung des Antriebsstrangs zu erreichen.

Das Dokument US-A-5,894,825 offenbart ein Schmiersystem für einen Verbrennungsmotor, mit einer Ölquelle, einer bidirektionalen Pumpe und Rückschlagventilen zwischen der Pumpe und der Ölquelle.

Vor dem obigen Hintergrund ist es eine Aufgabe der Erfindung, eine verbesserte Antriebsstrang-Kühlanordnung sowie ein Verfahren zu deren Betreiben anzugeben, die kostengünstig herstellbar ist, einen geringen Energieverbrauch hat und/oder dazu ausgelegt ist, zwei oder mehr Kühlkreise zu versorgen.

Die obige Aufgabe wird durch eine Antriebsstrang-Kühlanordnung gemäß Anspruch 1 gelöst.

Dem ersten und dem zweiten Kühlkreis wird daher das gleiche Kühlmittel zugeführt (vorzugsweise ATF-Öl). Das Kühlmittel kann dabei je nach Kühlkreis eine Kühlfunktion und/oder eine Schmierfunktion beinhalten. Der Einfachheit halber wird vorliegend im Wesentlichen auf den Begriff des Kühlen abgestellt, der jedoch im Rahmen der vorliegenden Anmeldung sich sowohl auf ein Kühlen als auch auf ein Schmieren von Elementen des Antriebsstranges beziehen kann.

Bei der erfindungsgemäßen Kühlanordnung kann der erste Kühlkreis mit einem Kühlmittel-Volumenstrom versorgt werden, wenn die bidirektionale Pumpe in einer ersten Drehrichtung mittels des Pumpen-Elektromotors angetrieben wird. Der erste Pumpenanschluss ist dann ein Druckanschluss und der zweite Pumpenanschluss ein Sauganschluss. In der zweiten Drehrichtung des Pumpen-Elektromotors ist der zweite Pumpenanschluss ein Druckanschluss und der erste Pumpenanschluss ein Sauganschluss, um auf diese Weise dem zweiten Kühlkreis einen Kühlmittel-Volumenstrom zur Verfügung zu stellen.

In den meisten Fahrsituationen von Kraftfahrzeugen ist die alternative Zurverfügungstellung eines Kühlmittel-Volumenstroms zu dem ersten Kühlkreis oder zu dem zweiten Kühlkreis hinreichend. In manchen Fahrsituationen kann es jedoch erforderlich sein, beiden Kühlkreisen gleichzeitig Kühlmittel zur Verfügung zu stellen.

Die obigen Aufgabe wird daher ebenfalls gelöst durch ein Verfahren gemäß Anspruch 8.

Die Frequenz richtet sich dabei nach der zu übertragenden Leistung, d.h. nach den entstehenden Wärme- und Reibungslasten bei unterschiedlichen Fahrzuständen.

Durch einen derartigen, relativ schnellen Wechsel der Drehrichtung ist es daher möglich, in den oben beschriebenen bestimmten Fahrsituationen sowohl den ersten Kühlkreis als auch den zweiten Kühlkreis im Wesentlichen gleichzeitig mit einem jeweils hinreichenden Kühlmittel-Volumenstrom zu versorgen.

Ferner ermöglicht die erfindungsgemäße Antriebsstrang-Kühlanordnung, in den ersten und/oder in den zweiten Kühlkreisen die Kühlung unterschiedlicher Baugruppen des Antriebsstranges zu integrieren, so dass ausgehend von der erfindungsgemäßen Kühlanordnung durch Anschluss mehrerer Baugruppen mit jeweils eigenen Kühlkreisen an den ersten und/oder den zweiten Pumpenanschluss ein Baukastenprinzip realisierbar ist. Hierdurch kann im Wesentlichen die gleiche Kühlanordnung für unterschiedliche Antriebsstränge verwendet werden, beispielsweise für einen Antriebsstrang ohne elektrischen Antriebsmotor und für einen Hybrid-An triebsstrang.

Durch die Tatsache, dass die Kühlanordnung nur bei Bedarf mittels des Pumpen-Elektromotors angetrieben werden kann, besitzt diese zudem einen guten Wirkungsgrad. Mit anderen Worten wird die bidirektionale Pumpe während des Betriebs des Fahrzeugs nicht zwangsweise angetrieben (wie bei Ankopplung an einen Verbrennungsmotor), sondern nur dann, wenn ein Kühlbedarf besteht.

Ferner ist es möglich, die Größe des Kühlbedarfes durch Einstellen der Drehzahl des Pumpen-Elektromotors einzustellen. Bei einem geringen Kühlbedarf kann der Pumpen-Elektromotor daher mit einer geringen Drehzahl betrieben werden, so dass dessen Leistungsaufnahme ebenfalls gering ist. Auch dies trägt zu dem guten Wirkungsgrad bei.

Die Anordnung aus der bidirektionalen Pumpe und dem mit der Pumpe verbundenen Pumpen-Elektromotor kann dabei an beliebiger Stelle innerhalb oder außerhalb von Gehäusen des Antriebsstranges angeordnet werden und über KühlmittelLeitungen mit den jeweiligen Kühlkreisen verbunden werden. Demzufolge lässt sich die Kühlanordnung an eine Vielzahl von Getrieben bzw. Getriebe-Einbausituationen anpassen.

Vorzugsweise weist der Antriebsstrang dabei lediglich die bidirektionale Pumpe als einzige Kühlmittelpumpe des Antriebsstranges auf.

Ferner ist es bevorzugt, wenn die Kühlanordnung keine elektromagnetisch angesteuerten Ventile aufweist, insbesondere keine Schieberventile. Hierdurch können die Anforderungen hinsichtlich der Sauberkeit bei Fertigung und Montage deutlich reduziert werden.

Zudem können die Größe der Pumpe und die Größe des Pumpen-Elektromotors relativ klein gehalten werden, da zur Versorgung der Kühlkreise beide Drehrichtungen genutzt werden können.

Das gesamte Thermomanagement des Antriebsstranges kann dabei unabhängig von einem Verbrennungsmotor optimal eingestellt werden. Die Aufgabe wird somit vollkommen gelöst.

Vorzugsweise ist der erste und/oder der zweite Kühlkreis über ein Rückschlagventil mit dem jeweiligen Pumpenanschluss verbunden.

Hierdurch ist es auf einfachere Weise möglich, den ersten und/oder den zweiten Pumpenanschluss je nach Drehrichtung als Sauganschluss einzurichten.

Gemäß einer weiteren bevorzugten Ausführungsform ist der erste und/oder der zweite Pumpenanschluss über ein Saugventil mit einem Niederdruckabschnitt wie einem Tank verbunden.

Auf diese Weise kann der erste und/oder zweite Pumpenanschluss je nach Drehrichtung als Sauganschluss eingerichtet werden, in welchem Fall über das jeweilige Saugventil Kühlmittel aus dem Niederdruckabschnitt angesaugt wird. Im Falle, dass der gleiche Pumpenanschluss als Druckanschluss eingerichtet ist, verhindert das Saugventil ein Fördern von Fluid hin zu dem Niederdruckabschnitt. Das Saugventil ist dabei vorzugsweise ebenfalls als Rückschlagventil ausgebildet. Vorzugsweise ist das als Rückschlagventil ausgebildete Saugventil ein federvorgespanntes Rückschlagventil.

Erfindungsgemäß sind der erste und der zweiten Kühlkreis über eine Blendenanordnung miteinander verbunden. Eine derartige Blendenanordnung kann zum einen dazu verwendet werden, um bei Antrieb des Pumpen-Elektromotors in einer ersten Richtung, bei der der erste Pumpenanschluss als Druckanschluss ausgebildet ist und ein Kühlmittel-Volumenstrom dem ersten Kühlkreis zur Verfügung gestellt wird, auch dem zweiten Kühlkreis über die Blendenanordnung einen gewissen Kühlmittel-Volumenstrom zuzuführen. Die Blendenanordnung kann dabei unidirektional sein, so dass dem zweiten Kühlkreis immer ein Teil des dem ersten Kühlkreis zugeführten Volumenstromes zugeführt wird, bei umgekehrter Drehrichtung jedoch dem ersten Kühlkreis kein Anteil des Kühlmittel-Volumenstromes zugeführt wird. Bevorzugt ist es jedoch, wenn die Blendenanordnung bidirektional wirkt, so dass bei der Versorgung von einem der Kühlkreise auch der andere Kühlkreis jeweils mit einem Anteil des geförderten Volumenstromes versorgt wird.

Bei dieser Ausführungsform ist es bevorzugt, wenn die Blendenanordnung so ausgebildet ist, dass der Querschnitt in der einen Verbindungsrichtung anders ist als der Querschnitt in der zweiten Verbindungsrichtung.

Die Verbindung der zwei Kühlkreise über eine Blendenanordnung kann zudem den Vorteil haben, dass hierdurch verhindert wird, dass keiner der Kühlkreise jemals vollständig leer läuft, so dass sich Vorteile hinsichtlich Entlüftung etc. ergeben.

Zudem ist es möglich, einen Kühler zum Kühlen von Kühlmittel nur auf der Seite von einem der Pumpenanschlüsse anzuschließen. Wenn beispielsweise der Kühler im Bereich des zweiten Kühlkreises angeschlossen ist und für einen längeren Zeitraum die Pumpe ausschließlich so betrieben wird, dass der Volumenstrom hin zu dem ersten Kühlkreis gefördert wird, so wird über die Blendenanordnung ein Teil des Volumenstromes immer auch dem Kühler im Bereich des zweiten Kühlkreises zugeführt, so dass eine übermäßige Erwärmung des Kühlmittels verhindert werden kann.

Um zu erreichen, dass die Querschnittsfläche der Blendenanordnung in der einen Durchflussrichtung anders ist als in der anderen Durchflussrichtung, ist es bevorzugt, wenn die Blendenanordnung ein Rückschlagventil aufweist.

Erfindungsgemäß weist die Blendenanordnung zwei parallele Zweige auf, wobei in zumindest einem der Zweige ein Rückschlagventil angeordnet ist und wobei in wenigstens einem der Zweige eine Blende angeordnet ist.

Besonders bevorzugt ist es, wenn in einem der Zweige eine Blende und in dem anderen Zweige eine Blende und ein Rückschlagventil angeordnet sind.

Eine derartige Blendenanordnung lässt sich konstruktiv auch in einem Element zusammenfassen.

Bei der erfindungsgemäßen Antriebsstrang-Kühlanordnung ist es bevorzugt, wenn der erste Kühlkreis einen Kupplungs-Kühlkreis aufweist, der beispielsweise zum Kühlen einer nass laufenden Lamellenkupplung oder eines Paketes aus zwei nass laufenden Lamellenkupplungen eines Doppelkupplungsgetriebes verwendbar ist.

Ferner ist es bevorzugt, wenn der zweite Kühlkreis einen Getriebe-Kühlkreis und/oder einen Elektromotor-Kühlkreis aufweist.

Sofern ein Getriebe des Antriebsstranges über eine Einspritzschmierung mit Kühlmittel zu versorgen ist, kann der zweite Kühlkreis einen Getriebe-Kühlkreis aufweisen. Wenn der Antriebsstrang einen Elektromotor als Antriebsmotor aufweist, der mit Kühlmittel zu versorgen ist, kann der zweite Kühlkreis zusätzlich oder alternativ einen Elektromotor-Kühlkreis aufweisen.

Wie oben beschrieben, ist es ferner bevorzugt, wenn der zweite Kühlkreis über einen Kühlmittel-Kühler mit dem zweiten Pumpenanschluss verbunden ist.

Hierdurch kann gewährleistet werden, dass die Temperatur des Kühlmittels nicht stark ansteigt.

Gemäß einer weiteren bevorzugten Ausführungsform weist der erste Kühlkreis und/oder der zweite Kühlkreis ein Nebenstromfilter auf.

Mit einem solchen Filter kann die Kühlmittelreinheit über längere Zeit aufrechterhalten werden. Dies kann beispielsweise ermöglichen, bei Wälzlagern in dem Getriebe Dichtscheiben entfallen zu lassen und damit eine Reduzierung der Schleppmomente im Radsatz zu erreichen. Hierdurch kann der Wirkungsgrad usw. erhöht werden.

Mit der erfindungsgemäßen Antriebsstrang-Kühlanordnung wird ein baukastentaugliches Kühlkonzept erstellt. Ferner kann die Kühlanordnung mit minimalem Hilfsenergiebedarf betrieben werden, um künftigen Anforderungen an den Verbrauch von Kraftfahrzeugen gerecht zu werden. Die Kühlanordnung ist vorzugsweise frei von Hydraulikventilen, insbesondere elektromagnetisch geschalteten Ventilen und Schieberventilen, so dass sich keine hohen Anforderungen an die technische Sauberkeit im Fluidkreislauf ergeben. Im einfachsten Fall kann die Antriebsstrang-Kühlanordnung nur zur Kühlung eines Elementes des Antriebsstranges verwendet werden, wie beispielsweise einer nass laufenden Kupplungsanordnung. In diesem Fall könnte beispielsweise an den zweiten Kühlkreis gar keine zu kühlende Baugruppe angeschlossen sein. Modular können dann am Bereich des zweiten Pumpenanschlusses vorzugsweise die Kühlung eines Elektromotors, die Kühl- bzw. Schmiermittelversorgung von Radsätzen und/oder Lagern eines Getriebes, die Versorgung eines Kühlers und/oder die Versorgung eines Nebenstromfilters realisiert werden.

Es versteht sich, dass die vorstehend genannten und die nachstehend noch zu erläuternden Merkmale nicht nur in der jeweils angegebenen Kombination, sondern auch in anderen Kombinationen gemäß den vorliegenden Ansprüchen verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

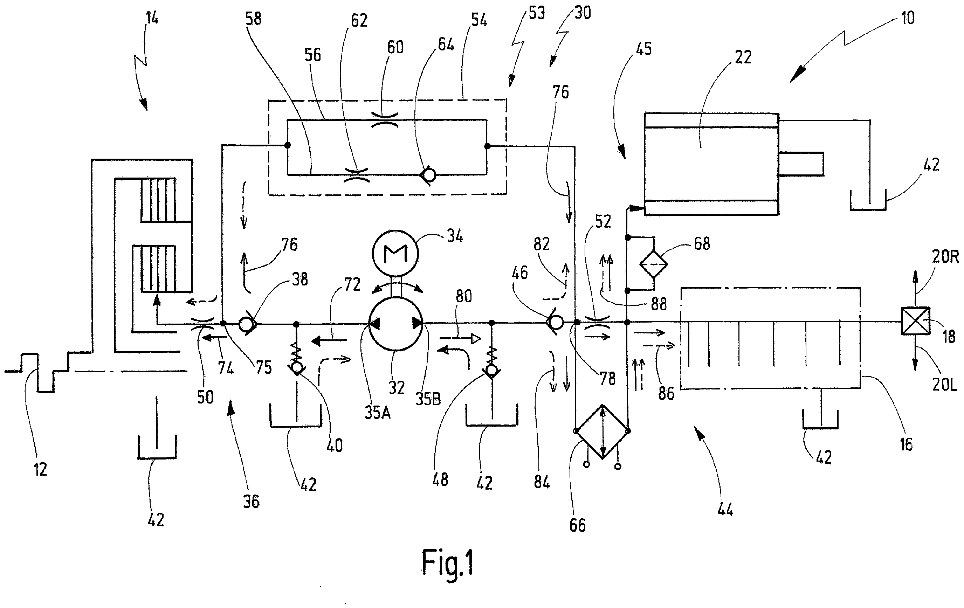

Fig. 1    eine schematische Darstellung eines Antriebsstranges für ein Kraftfahrzeug mit einer Ausführungsform einer erfindungsgemäßen Antriebsstrang-Kühlanordnung.

In Fig. 1 ist ein Antriebsstrang für ein Kraftfahrzeug schematisch dargestellt und generell mit 10 bezeichnet. Der Antriebsstrang 10 beinhaltet einen Antriebsmotor 12 (beispielsweise in Form eines Verbrennungsmotors) und eine Kupplungsanordnung 14. Im vorliegenden Fall ist die Kupplungsanordnung 14 durch zwei nass laufende Lamellenkupplungen gebildet. Die Kupplungsanordnung 14 könnte jedoch auch nur eine nass laufende Lamellenkupplung beinhalten oder auch mehr als die zwei genannten Lamellenkupplungen, z.B. innerhalb oder am Differentialgetriebe.

Ferner weist der Antriebsstrang 10 ein Getriebe auf, das beispielsweise im Fall eines Doppelkupplungsgetriebes zwei Teilgetriebe beinhalten kann. In dem Getriebe ist eine Mehrzahl von Radsätzen vorgesehen, mittels derer unterschiedliche Getriebeübersetzungen eingerichtet werden können. Das Getriebe 16 ist zumindest teilweise als einspritzgeschmiertes Getriebe ausgebildet, beispielsweise durch Ölleitungen in Wellen des Getriebes.

Ein Ausgang des Getriebes 16 ist mit einem Differenzial 18 verbunden, mittels dessen die Antriebsleistung auf angetriebene Räder 20L, 20R des Kraftfahrzeuges verteilt werden kann.

Ferner beinhaltet der Antriebsstrang 10 einen Antriebsmotor in Form eines Elektromotors 22. Der Antriebsstrang 10 ist folglich als Hybrid-Antriebsstrang ausgebildet. Der Antriebsstrang 10 ist vorzugsweise so ausgebildet, dass das Kraftfahrzeug entweder mittels des Verbrennungsmotors 12 oder ausschließlich mittels des Elektromotors 22 oder unter Verwendung der Antriebsleistung von sowohl dem Verbrennungsmotor 12 als auch dem Elektromotor 22 angetrieben werden kann.

In einer Variante des Antriebsstranges 10 weist dieser keinen Elektromotor 22 in Form eines Antriebsmotors auf.

Ferner beinhaltet der Antriebsstrang 10 eine Kühlanordnung 30. Die Kühlanordnung 30 weist eine bidirektionale Pumpe 32 auf, die als Rotationspumpe ausgebildet ist und mit einem Pumpen-Elektromotor 34 verbunden ist. Der Pumpen-Elektromotor 34 kann die Pumpe 32 in beiden Drehrichtungen antreiben, wie es in Fig. 1 schematisch durch einen Doppelpfeil angedeutet ist.

Die Pumpe 32 weist einen ersten Pumpenanschluss 35A und einen zweiten Pumpenanschluss 35B auf. Der erste Pumpenanschluss 35A ist mit einem Kupplungskühlkreis 36 verbunden, der dazu eingerichtet ist, die Kupplungsanordnung 14 mit Kühlmittel zu versorgen. Dabei ist der erste Pumpenanschluss 35A über ein erstes Rückschlagventil 38 mit dem Kupplungs-Kühlkreis 36 verbunden. Ferner ist der erste Pumpenanschluss 35A über in erstes Saugventil 40 in Form eines federvorbelasteten Rückschlagventils mit einem Niederdruckabschnitt wie einem Tank 42 verbunden.

Ferner weist die Kühlanordnung 30 einen zweiten Kühlkreis auf, der im vorliegenden Fall einen Getriebe-Kühlkreis 44 und einen Elektromotor-Kühlkreis 45 beinhaltet. Der zweite Kühlkreis ist über ein zweites Rückschlagventil 46 mit dem zweiten Pumpenanschluss 35B verbunden. Ferner ist der zweite Pumpenanschluss 35B über ein zweites Saugventil 48 in Form eines federvorgespannten Rückschlagventils mit dem Niederdruckabschnitt 42 verbunden.

Im Bereich des Eingangs des Kupplungs-Kühlkreises 36 ist eine erste Blende 50 vorgesehen. In entsprechender Weise ist im Bereich des Eingangs des zweiten Kühlkreises 44, 45 eine zweite Blende 52 vorgesehen. Der erste Kupplungs-Kühlkreis 36 und der zweite Kühlkreis 44, 45 sind über eine Kühlkreisverbindung 53 miteinander verbunden. Die Kühlkreisverbindung 53 weist eine Blendenanordnung 54 auf. Die Blendenanordnung 54 beinhaltet einen ersten Zweig 56 und einen hierzu parallelen zweiten Zweig 58. In dem ersten Zweig 56 ist eine dritte Blende 60 angeordnet. In dem zweiten Zweig 58 sind eine vierte Blende 62 sowie ein Rückschlagventil 64 seriell hintereinander angeordnet.

Über der zweiten Blende 52 ist ein Kühler 66 angeschlossen. Ferner beinhaltet der zweite Kühlkreis 44, 45 ein Nebenstromfilter 68, das in einem Nebenstromkreis hin zu dem Elektromotor-Kühlkreis 45 angeschlossen ist.

Im Betrieb wird die Kühlanordnung 30 entweder so betrieben, dass der Pumpen-Elektromotor 34 in einer ersten Drehrichtung betrieben wird, bei der der erste Pumpenanschluss 35A ein Druckanschluss und der zweite Pumpenanschluss 35B ein Sauganschluss ist. In diesem Fall saugt die Pumpe 32 Hydraulikfluid über das zweite Saugventil 48 an. Durch das zweite Rückschlagventil 46 wird vermieden, dass Kühlmittel aus dem zweiten Kühlkreis 44, 45 angesaugt wird. Auf der Druckseite an dem ersten Pumpenanschluss 35A wird hierdurch ein erster Haupt-Volumenstrom 72 aus Kühlmittel wie z.B. ATF-Fluid bereitgestellt. Durch das erste Saugventil 40 wird verhindert, dass ein Teil dieses ersten Haupt-Volumenstroms zurück in den Niederdruckabschnitt 42 gelangt. Das erste Rückschlagventil 38 öffnet, so dass der erste Haupt-Volumenstrom 72 in erster Linie in Form eines Kupplungs-Volumenstroms 74 durch die erste Blende 50 hindurch der Kupplungsanordnung 14 zugeführt wird. Zwischen dem ersten Rückschlagventil 38 und der ersten Blende 50 ist ein erster Abzweigknoten 75 vorgesehen, an dem die Kühlkreisverbindung 53 angeschlossen ist. Demzufolge fließt ein erster Abzweig-Volumenstrom 76 hin zu der Blendenanordnung 54. In dieser Strömungsrichtung öffnet das Rückschlagventil 64 in dem zweiten Zweig 58, so dass Fluid durch die dritte Blende 60 und die vierte Blende 62 hindurch hin zu einem zweiten Abzweig-Knoten 78 strömt, der zwischen dem zweiten Rückschlagventil 46 und der zweiten Blende 52 angeschlossen ist. Von dort verteilt sich der erste Abzweig-Volumenstrom 76 auf einen Volumenstrom hin zu dem zweiten Kühlkreis 44, 45 und einem Volumenstrom hin zu dem Kühler 66. In Strömungsrichtung hinter der zweiten Blende 52 ist ein weiterer Knoten vorgesehen, an dem zum einen der Getriebe-Kühlkreis 44 angeschlossen ist und an dem zu anderen der Elektromotor-Kühlkreis 45 angeschlossen ist, so dass sich der durch die zweite Blende 52 und der aus dem Kühler 66 zurückströmende Volumenstrom auf den Getriebe-Kühlkreis 44 und den Elektromotor-Kühlkreis 45 verteilen. Über das Nebenstromfilter 68 wird dabei für eine hohe Ölreinheit gesorgt.

Rückströmendes Fluid aus dem Kupplungs-Kühlkreis 36, aus dem Getriebe-Kühlkreis 44 und aus dem Elektromotor-Kühlkreis 45 gelangt jeweils in den Niederdruckabschnitt 42, von wo das Kühlmittel wiederum angesaugt werden kann.

Die Größe bzw. die Querschnitte der Blenden 50, 52, 60, 62 sind so aneinander angepasst, dass der erste Abzweig-Volumenstrom 76 deutlich kleiner ist als der Kupplungs-Volumenstrom 74.

Hierdurch wird gewährleistet, dass ein Großteil des von der Pumpe 32 bereitgestellten ersten Haupt-Volumenstromes 72 zur Kühlung der Kupplungsanordnung 40 verwendet werden kann, wohingegen der kleinere Teil dieses ersten Haupt-Volumenstromes dazu verwendet werden kann, um die Schmierung in dem Getriebe 16 aufrecht zu erhalten und/oder das Kühlmittel zu kühlen. Hierdurch kann gewährleistet werden, dass auch bei einer häufigen Verwendung der Kupplungsanordnung 14 unmittelbar nacheinander (beispielsweise bei häufigeren Berganfahrten) die Verlustenergie über den Kühler 66 abgeführt werden kann.

Ferner kann die Größe des ersten Haupt-Volumenstromes 72 durch Verändern der Drehzahl des Pumpen-Elektromotors 34 eingestellt werden, beispielsweise auf einen kleinen oder auf einen großen Volumenstrom, je nach Bedarf.

In der zweiten Drehrichtung des Pumpen-Elektromotors 34 wird Fluid über das erste Saugventil 40 aus dem Niederdruckabschnitt 42 angesaugt, wobei das erste Rückschlagventil 38 verhindert, dass Fluid aus dem Kupplungs-Kühlkreis 36 angesaugt wird. Im Bereich des zweiten Pumpenanschlusses 35B wird dabei ein zweiter Haupt-Volumenstrom 80 eingerichtet. Durch das zweite Saugventil 48 wird verhindert, dass ein Teil dieses zweiten Haupt-Volumenstroms 80 wieder in den Niederdruckabschnitt 42 gelangt. Das zweite Rückschlagventil 46 ist dann geöffnet. Im Bereich des zweiten Abzweigknotens verteilt sich der erste Haupt-Volumenstrom 80 auf einen durch die zweite Blende 52 hindurchfließenden Volumenstrom und einen in den Kühler 66 fließenden Kühler-Volumenstrom 84. Ferner wird ein Teil des zweiten Haupt-Volumenstroms 80 in Form eines zweiten Abzweig-Volumenstroms 82 der Blendenanordnung 54 zugeführt. Bei dieser Strömungsrichtung sperrt das Rückschlagventil 64 in dem zweiten Zweig 58, so dass der zweite Abzweig-Volumenstrom 82 ausschließlich durch die dritte Blende 60 strömt und zu dem ersten Abzweig-Knoten 75 gelangt, von wo er über die erste Blende 50 der Kupplungsanordnung dem Kupplungs-Kühlkreis 36 zugeführt wird.

Der durch die zweite Blende 52 strömende Teil des zweiten Haupt-Volumenstroms 80 und der Rückstrom aus dem Kühler 66 werden auf einen Getriebe-Volumenstrom 86 und einen Elektromotor-Volumenstrom 88 verteilt.

In der zweiten Drehrichtung dient der zweite Haupt-Volumenstrom 80 in erster Linie zum Schmieren von Bauelementen des Getriebes 16. Da im Betrieb des Fahrzeugs Verzahnungen des Getriebes 16 dauerhaft im Eingriff sind, wird dieser zweite Zustand, bei dem der Pumpen-Elektromotor 34 in der zweiten Drehrichtung dreht, vorzugsweise dauerhaft eingerichtet. Hierbei kann der Pumpen-Elektromotor 34 jedoch mit einer geringen Drehzahl angetrieben werden, da der in dem Getriebe 16 benötigte Volumenstrom in der Regel relativ gering ist. Wenn auch der Antriebs-Elektromotor 22 mit Kühlmittel zu versorgen ist, beispielsweise bei einem rein elektrischen Fahrbetrieb, kann die Drehzahl des Pumpen-Elektromotors 34 erhöht werden. In beiden Fällen fließt ein sehr kleiner zweiter Abzweig-Volumenstrom 82 hin zu dem Kupplungs-Kühlkreis 36. Der zweite Abzweig-Volumenstrom 82 ist vorzugsweise kleiner als der erste Abzweig-Volumenstrom 76 (bei gleicher Drehzahl des Pumpen-Antriebsmotors 34).

Während Gangschaltungen kann es auch möglich sein, den Pumpen-Elektromotor 34 vollständig abzuschalten. Hierdurch wird der zweite Haupt-Volumenstrom 80 vollständig eingestellt, so dass Schleppmomente in dem Getriebe 16 reduziert werden können.

Ferner ist es in manchen Fahrsituationen notwendig, sowohl den Kupplungs-Kühlkreis 36 als auch die anderen Kühlkreise 44 und/oder 45 mit Kühlmittel zeitgleich zu versorgen. In diesem Fall ist es bevorzugt, wenn der Pumpen-Elektromotor seine Drehrichtung mit einer Frequenz im Bereich von $\dfrac{1}{10}$ Hz bis 7 Hz wechselt.

Hierdurch kann eine quasi kontinuierliche Versorgung sämtlicher Kühlkreise realisiert werden.

**Patentansprüche**

1. Antriebsstrang-Kühlanordnung (30) für Kraftfahrzeuge, mit einem ersten Kühlkreis (36) und einem zweiten Kühlkreis (44, 45) sowie mit einer Pumpenanordnung (32), mittels der Kühlmittel dem ersten und dem zweiten Kühlkreis zugeführt werden kann, wobei die Pumpenanordnung eine bidirektionale Pumpe (32) aufweist, die einen ersten Pumpenanschluss (35A) und einen zweiten Pumpenanschluss (35B) aufweist und von einem Pumpen-Elektromotor (34) antreibbar ist, wobei der erste Pumpenanschluss (35A) mit dem ersten Kühlkreis (36) verbunden ist, wobei der zweite Pumpenanschluss (35B) mit dem zweiten Kühlkreis (44, 45) verbunden ist und wobei ein dem ersten und/oder dem zweiten Kühlkreis zur Verfügung gestellter Kühlmittel-Volumenstrom (74; 86, 88) durch Verändern der Drehzahl des Pumpen-Elektromotors (34) einstellbar ist, wobei der erste und der zweite Kühlkreis über eine Blendenanordnung (54) miteinander verbunden sind, die so ausgebildet ist, dass bei Antrieb des Pumpen-Elektromotors (34) in einer ersten Richtung, bei der der erste Pumpenanschluss (35A) als Druckanschluss ausgebildet ist und ein Kühlmittel-Volumenstrom dem ersten Kühlkreis (36) zur Verfügung gestellt wird, auch dem zweiten Kühlkreis (44, 45) über die Blendenanordnung (54) ein gewisser Kühlmittel-Volumenstrom zugeführt wird, **dadurch gekennzeichnet, dass** die Blendenanordnung zwei parallele Zweige (56, 58) aufweist, wobei in zumindest einem der Zweige ein Rückschlagventil (64) angeordnet ist und wobei in wenigstens einem der Zweige eine Blende (60, 62) angeordnet ist.

2. Kühlanordnung nach Anspruch 1, **dadurch gekennzeichnet, dass** der erste und/oder der zweite Kühlkreis über ein Rückschlagventil (38; 46) mit dem jeweiligen Pumpenanschluss (35A; 35B) verbunden ist.

3. Kühlanordnung nach Anspruch 1 oder 2, **dadurch gekennzeichnet, dass** der erste und/oder der zweite Pumpenanschluss (35A; 35B) über ein Saugventil (40; 48) mit einem Niederdruckabschnitt (42) verbunden ist.

4. Kühlanordnung nach einem der Ansprüche 1 - 4, **dadurch gekennzeichnet, dass** der erste Kühlkreis einen Kupplungs-Kühlkreis (36) aufweist.

5. Kühlanordnung nach einem der Ansprüche 1 - 5, **dadurch gekennzeichnet, dass** der zweite Kühlkreis einen Getriebe-Kühlkreis (44) und/oder einen Elektromotor-Kühlkreis (45) aufweist.

6. Kühlanordnung nach einem der Ansprüche 1 - 6, **dadurch gekennzeichnet, dass** der zweite Kühlkreis (45) über einen Kühlmittel-Kühler (66) mit dem zweiten Pumpenanschluss (35B) verbunden ist.

7. Kühlanordnung nach einem der Ansprüche 1 - 7, **dadurch gekennzeichnet, dass** der erste und/oder der zweite Kühlkreis (45) ein Nebenstromfilter aufweist.

**8.** Verfahren zum Betreiben einer Antriebsstrang-Kühlanordnung (30) nach einem der Ansprüche 1 - 8 mit einer bidirektionalen Pumpe (32) und mit einem die Pumpe (32) antreibenden Pumpen-Elektromotor (34), wobei die Drehrichtung des Pumpen-Elektromotors (34) mit einer Frequenz im Bereich von $\dfrac{1}{10}$ Hz bis 7 Hz gewechselt wird.

## Claims

**1.** A drive train cooling arrangement (30) for motor vehicles, having a first cooling circuit (36) and a second cooling circuit (44, 45) and having a pump arrangement (32), by means of which coolant can be fed to the first and the second cooling circuit, wherein the pump arrangement has a bidirectional pump (32), which has a first pump port (35A) and a second pump port (35B) and which can be driven by a pump electric motor (34), wherein the first pump port (35A) is connected to the first cooling circuit (36), wherein the second pump port (35B) is connected to the second cooling circuit (44, 45) and wherein a coolant volume flow (74; 86, 88) which is provided for the first and/or the second cooling circuit can be adjusted by changing the rotational speed of the pump electric motor (34), wherein the first and the second cooling circuit are connected to one another via an orifice arrangement (54), which is arranged such that, when the pump electric motor (34) is driven in a first direction, in which the first pump port is designed as a pressure port and a coolant volume flow is made available to the first cooling circuit, the second cooling circuit (44, 45) is also supplied, via the orifice arrangement (54), with a certain coolant volume flow, **characterized in that** the orifice arrangement has two parallel branches (56, 58), wherein a check valve (64) is arranged in at least one of the branches and wherein an orifice (60, 62) is arranged in at least one of the branches.

**2.** The cooling arrangement as claimed in claim 1, **characterized in that** the first and/or the second cooling circuit is/are connected to the respective pump port (35A; 35B) via a check valve (38; 46).

**3.** The cooling arrangement as claimed in claim 1 or 2, **characterized in that** the first and/or the second pump port (35A; 35B) is/are connected to a low-pressure section (42) via a suction valve (40; 48).

**4.** The cooling arrangement as claimed in one of claims 1-4, **characterized in that** the first cooling circuit has a clutch cooling circuit (36).

**5.** The cooling arrangement as claimed in one of claims 1-5, **characterized in that** the second cooling circuit has a transmission cooling circuit (44) and/or an electric motor cooling circuit (45).

**6.** The cooling arrangement as claimed in one of claims 1-6, **characterized in that** the second cooling circuit (45) is connected to the second pump port (35B) via a coolant cooler (66).

**7.** The cooling arrangement as claimed in one of claims 1-7, **characterized in that** the first and/or the second cooling circuit (45) has/have a bypass filter.

**8.** A method for operating a drive train cooling arrangement (30) having a bidirectional pump (32) and having a pump electric motor (34) which drives the pump (32), in particular as claimed in one of claims 1-8, wherein the direction of rotation of the pump electric motor (34) is changed at a frequency in a range of from 1/10 Hz to 7 Hz.

## Revendications

**1.** Dispositif de refroidissement (30) pour chaîne cinématique pour véhicules automobiles, avec un premier circuit de refroidissement (36) et un deuxième circuit de refroidissement (44, 45) ainsi qu'avec un agencement de pompe (32) au moyen duquel un réfrigérant peut être acheminé au premier et au deuxième circuit de refroidissement, l'agencement de pompe présentant une pompe (32) bidirectionnelle qui présente un premier raccord de pompe (35A) et un deuxième raccord de pompe (35B) et qui peut être entraînée par un moteur électrique de pompe (34), le premier raccord de pompe (35A) étant raccordé au premier circuit de refroidissement (36), le deuxième raccord de pompe (35B) étant raccordé au deuxième circuit de refroidissement (44, 45), et un flux volumique de réfrigérant (74 ; 86, 88) mis à disposition du premier et/ou du deuxième circuit de refroidissement pouvant être réglé par la modification de la vitesse de rotation du moteur électrique de pompe (34), le premier et le deuxième circuit de refroidissement étant raccordés l'un à l'autre par le biais d'un agencement de diaphragme (54) qui est constitué de telle sorte que, lors de l'entraînement du moteur électrique de pompe (34) dans un premier sens pour lequel le premier raccord de pompe (35A) est constitué en tant que raccord de pression et pour lequel un flux volumique de réfrigérant est mis à disposition du premier circuit de refroidissement (36), un certain flux volumique de réfrigérant est acheminé également au deuxième circuit de refroidissement (44, 45) par le biais de l'agencement de diaphragme (54), **caractérisé en ce que** l'agencement de diaphragme présente deux branches (56, 58) parallèles, un clapet antiretour (64) étant disposé dans au moins une des branches et un diaphragme (60, 62) étant disposé dans au moins une des branches.

2. Dispositif de refroidissement selon la revendication 1, **caractérisé en ce que** le premier et/ou le deuxième circuit de refroidissement est raccordé au raccord de pompe (35A ; 35B) respectif par le biais d'un clapet antiretour (38, 46).

3. Dispositif de refroidissement selon la revendication 1 ou 2, **caractérisé en ce que** le premier et/ou le deuxième raccord de pompe (35A ; 35B) est raccordé à un tronçon basse pression (42) par le biais d'une soupape d'aspiration (40 ; 48).

4. Dispositif de refroidissement selon l'une des revendications 1 - 4, **caractérisé en ce que** le premier circuit de refroidissement présente un circuit de refroidissement d'embrayage (36).

5. Dispositif de refroidissement selon l'une des revendications 1 - 5 **caractérisé en ce que** le deuxième circuit de refroidissement présente un circuit de refroidissement de transmission (44) et/ou un circuit de refroidissement de moteur électrique (45).

6. Dispositif de refroidissement selon l'une des revendications 1 - 6, **caractérisé en ce que** le deuxième circuit de refroidissement (45) est raccordé au deuxième raccord de pompe (35B) par le biais d'un refroidisseur de réfrigérant (66).

7. Dispositif de refroidissement selon l'une des revendications 1 - 7, **caractérisé en ce que** le premier et/ou le deuxième circuit de refroidissement (45) présente un filtre en dérivation.

8. Procédé destiné au fonctionnement d'un dispositif de refroidissement (30) pour chaîne cinématique selon l'une des revendications 1 - 8, avec une pompe (32) bidirectionnelle et avec un moteur électrique de pompe (34) entraînant la pompe (32), le sens de rotation du moteur électrique de pompe (34) étant inversé à une fréquence dans la plage de $1/10^{\text{ème}}$ Hz à 7 Hz.

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040045749 A
- US 5894825 A